# EUROPÄISCHE PATENTSCHRIFT

(11) **EP 1 264 806 B1**
(45) Veröffentlichungstag und Bekanntmachung des Hinweises auf die Patenterteilung: **27.12.2017**
(21) Anmeldenummer: 02009953.7
(22) Anmeldetag: 03.05.2002
(51) Int. Cl.: C03C 17/42, C03C 17/36, C03C 17/38

(54) **Glas- oder Glaskeramikpaneel**
Glass- or glassceramic-panel
Panneau en verre ou en vitrocéramique

(30) Priorität: 07.05.2001 DE 10122093
(43) Veröffentlichungstag der Anmeldung: 11.12.2002
(73) Patentinhaber: Schott AG, 55122 Mainz (DE)
(72) Erfinder: Martini, Claus, Dr., 31061 Alfeld-Leine (DE); Mason, Ian, Sedgefield, Co. Durham TS21 2JA (GB); Beadle, Peter, Co. Durham, DL5 7HR (GB)
(74) Vertreter: Herrmann, Jochen

(56) Entgegenhaltungen:
- EP-A- 0 345 993
- WO-A-99/33760
- GB-A- 895 445
- GB-A- 2 342 598
- US-A- 5 248 331

## Beschreibung

Die Erfindung betrifft ein Glas- oder Glaskeramikpaneel, bei dem ein Teilbereich der Oberfläche zumindest einer Seite Metallaussehen aufweist.

Gerade beim Einsatz derartiger Glas- oder Glaskeramikpaneele im Haushaltbereich wird immer größerer Wert auf ein hochqualitatives Aussehen gelegt, insbesondere bei Einrichtungs- und Haushaltungsgegenständen der Spitzen-Preisklasse. Dies bedingt den Einsatz teurer Materialien und führt in der Regel zu aufwendigen Herstellverfahren.

Das metallische Aussehen von Teilbereichen eines Glas- oder Glaskeramikpaneels wird durch Aufkleben von Metallfolien oder Metallblechen auf eine Glas- oder Glaskeramikplatte erreicht. Dabei werden Edelstahl- oder Aluminium-Zuschnitte bevorzugt, wie dies z.B. bei Herdtüren üblich ist. Der Teile- und Montageaufwand für ein auf diese Weise herzustellendes Glas- oder Glaskeramikpaneel ist beachtlich und führt zwangsläufig zu hohen Herstellkosten. Aus der GB 895, 445 ist ein Glaspaneel bekannt, dass mit einer Beschichtung versehen ist, um dem Glaspaneel metallisches Aussehen zu verleihen. Zu diesem Zweck schlägt die GB 895, 445 vor, eine Glasscheibe mit einer Farbsubstanz zu beschichten. Über die Farbsubstanz kann eine Metallschicht oder eine Emaille Schicht gebracht werden. Auf die Metall- oder die Emaille- Schicht ist eine Aluminiumschicht aufgebracht. In der EP 0 345 993 A1 ist ein Verfahren zur Beschichtung eines wärmebeständigen Glases beschrieben. Dabei wird auf das Substrat eine UV- oder thermisch härtbare Tinte gebracht, die eine anorganische keramische Farbe aufweist.

Es ist Aufgabe der Erfindung, ein Glas- oder Glaskeramikpaneel der eingangs erwähnten Art zu schaffen, das mit reduziertem Teile- und Montageaufwand kostengünstiger hergestellt werden kann und dabei noch verbesserte Eigenschaften und Anwendungsmöglichkeiten mit sich bringt.

Diese Aufgabe wird nach der Erfindung dadurch gelöst, dass zumindest auf Teile einer Glas- oder Glaskeramikplatte eine Schicht keramischer Farbe eingebrannt ist, und dass zumindest auf Teile der Glas- oder Glaskeramikplatte eine Metallbeschichtung aufgebracht ist.

Durch die Wahl der Teilbereiche kann nicht nur das metallische Aussehen von Teilbereichen des Glas- oder Glaskeramikpaneels bestimmt werden, es lassen sich auch Teile der Glas- oder Glaskeramikplatte als Fenster freilassen. Die Metallbeschichtung erfordert geringe Materialkosten und die Verbindung mit der Glas- oder Glaskeramikplatte nur einfache Verfahrensschritte. Zwischen der Metallbeschichtung und der der Glas- oder Glaskeramikplatte entsteht kein Spalt mehr, so dass das Glas- oder Glaskeramikpaneel leichter zu reinigen ist wie ein mit Metallfolie oder Metallblech versehenes Paneel. Die Metallbeschichtung dieser Art führt neben einer Gewichtsreduzierung auch zu einem Vermeiden der Nachteile unterschiedlicher Wärmeausdehnung der miteinander verbundenen Materialien und erlaubt zudem einen höheren Freiheitsgrad für das Design des neuen Glas- oder Glaskeramikpaneels.

Die Möglichkeit der Ineinanderverschachtelung der Metallbeschichtung und der Schicht aus keramischer Farbe macht einen Zusatzdruck auf der Metallfolie oder dem Metallblech überflüssig. Der Metalleffekt des neuen Glas- oder Glaskeramikpaneels kommt besser zur Geltung wie bei einem metallischen Oberflächendruck und das neue Glas- oder Glaskeramikpaneel fühlt sich angenehmer an.

Die untrennbare Verbindung zwischen der Glas- oder Glaskeramikplatte und der Schicht aus keramischer Farbe wird dadurch erreicht, dass die Schicht aus keramischer Farbe auf der Glas- oder Glaskeramikplatte eingebrannt ist und der Metalleffekt kann nach einer weiteren Ausgestaltung dadurch variiert werden, dass die Schicht aus keramischer Farbe und/oder die Metallbeschichtung strukturiert sind (ist).

Erfindungsgemäß ist vorgesehen, dass die Schicht aus keramischer Farbe auf der Rückseite und die Metallbeschichtung auf der Sichtseite der Glas- oder Glaskeramikplatte aufgebracht sind. Dadurch wird ein glänzender Metalleffekt erreicht

Die Ineinanderverschachtelung der Metallbeschichtung mit der Schicht aus keramischer Farbe kann auf unterschiedliche Weise erfolgen, um das Aussehen des Glas- oder Glaskeramikpaneels zu verändern und zusätzlich Beschriftungen, graphische Darstellungen, Verzierungen und dgl. aufzubringen.

So ist nach einer Ausgestaltung vorgesehen, dass die Schicht aus keramischer Farbe Fehlstellen aufweist, die von Teilen der Metallbeschichtung überdeckt sind, und dass diese Teile der Metallbeschichtung mit Teilen der Glas- oder Glaskeramikplatte verbunden sind.

Anstelle der sichtbaren Epoxy-Schicht kann auch ein beleuchtetes Anzeigeelement Verwendung finden.

Eine weitere Variationsmöglichkeit ergibt sich dadurch, dass auf der Sichtseite der Glas- oder Glaskeramikplatte eine Metallbeschichtung mit Fehlstellen aufgebracht ist, und dass über Fenster der Glas- oder Glaskeramikplatte Teile der auf der Rückseite der Glas- oder Glaskeramikplatte aufgebrachten Schicht aus keramischer Farbe einsehbar sind.

Wie diese Alternativen zeigen, wird stets mit einfachen Mitteln durch die Verteilung der Metallbeschichtung und der Schicht aus keramischer Farbe und die Ausbildung der Fehlstellen in diesen Schichten das Aussehen und die Graphik des Glas- oder Glaskeramikpaneels beeinflusst.

Weitere Variationsmöglichkeiten sind dadurch gegeben, dass die Metallbeschichtung aus Cr, Ag, Cu, Au, Al oder Sn besteht und dass die Metallbeschichtung mittels einer transparenten Schutzschicht abgedeckt ist. Mit der transparenten Schutzschicht wird die Beständigkeit der Metallbeschichtung verbessert, was insbesondere bei Ag, Cu, Al und Sn von Bedeutung ist.

Das Grundelement - die Glas- oder Glaskeramikplatte - des Glas- oder Glaskeramikpaneels ist als Zuschnitt aus einem im Fliessverfahren hergestellten Glasband geschnitten. Der Zuschnitt ist mechanisch bearbeitet, bevor er mit der Schicht aus keramischer Farbe versehen wird. Dies kann eine Kantenbearbeitung oder das Einbringen von Bohrungen und dgl. sein.

Bei der Herstellung der Metallschicht ist besonders wichtig, wie die Fehlstellen erzeugt werden. Das Verfahren sieht dazu vor, dass zur Bildung der Fehlstellen in der Metallbeschichtung Masken verwendet werden, die vor dem Aufbringen der Metallbeschichtung mit der Glas- oder Glaskeramikplatte verbunden und nach dem Aufbringen derselben von der Glas- oder Glaskeramikplatte entfernt werden.

Für die untrennbare Verbindung von Glas- oder Glaskeramikplatte und der Schicht aus keramischer Farbe wird vorgesehen, dass die Schicht aus keramischer Farbe in bekannter Weise in z.B. einem Durchlaufofen eingebrannt wird.

Die Metallbeschichtung wird in bekannten Beschichtungsverfahren, wie Tauchbeschichtung, Walzenbeschichtung, Sprühbeschichtung, physikalische Dampfphasenabscheidung (PVD), chemische Dampfphasenabscheidung (CVD) und insbesondere Vakuum-Sputtering, aufgebracht.

Die Erfindung wird anhand von in den Zeichnungen dargestellten Ausführungsbeispielen näher erläutert. Es zeigen:
Fig. 1 einen Teilquerschnitt durch ein nicht erfindungsgemäßes Glas- oder Glaskeramikpaneel mit vollständiger Metallbeschichtung,
Fig. 2 einen Teilquerschnitt durch ein nicht erfindungsgemäßes Glas- oder Glaskeramikpaneel mit einer Fehlstelle in der Schicht aus keramischer Farbe,
Fig. 3 einen Teilquerschnitt durch ein nicht erfindungsgemäßes Glas- oder Glaskeramikpaneel mit einer Fehlstelle in der Metallbeschichtung,
Fig. 4 einen Teilquerschnitt durch ein nicht erfindungsgemäßes Glas- oder Glaskeramikpaneel mit fluchtenden Fehlstellen in der Metallbeschichtung und der Schicht aus keramischer Farbe, wobei die Rückseite der Glas- oder Glaskeramikplatte mit einer Farbschicht abgedeckt ist,
Fig. 5 einen Teilquerschnitt durch ein erfindungsgemäßes Glas- oder Glaskeramikpaneel mit einer mit einer Fehlstelle versehenen Metallbeschichtung auf der Sichtseite und einer Schicht aus keramischer Farbe auf der Rückseite der Glas- oder Glaskeramikplatte,
Fig. 6 eine schematische Skizze zur Erläuterung des Verfahrens zum Herstellen eines Glas- oder Glaskeramikpaneels nach Fig. 4, jedoch ohne Epoxy-Farbschicht und
Fig. 7 eine schematische Skizze zur Erläuterung des Verfahrens zum Herstellen eines Glas- oder Glaskeramikpaneels nach Fig. 5, jedoch mit Fehlstelle in der Metallbeschichtung.

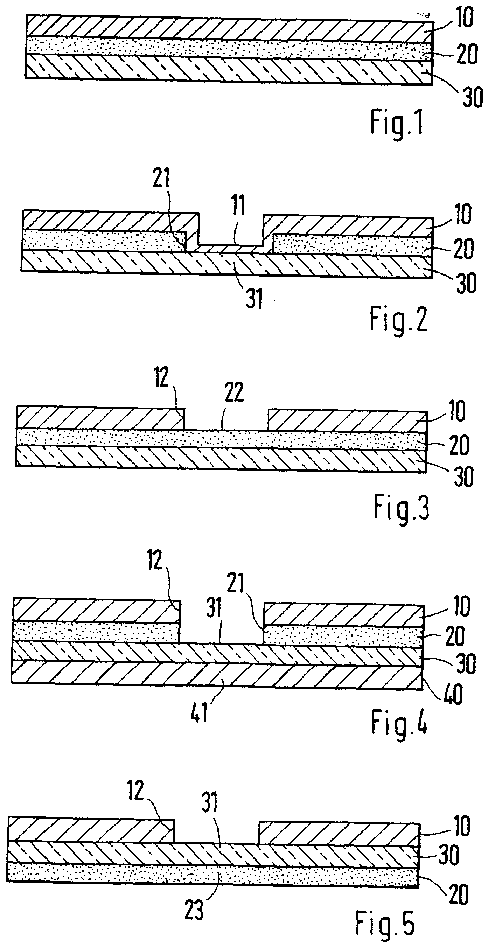

Bei dem in Fig. 1 skizzierten Glas- oder Glaskeramikpaneel wird auf die Sichtseite der Glas- oder Glaskeramikplatte 30 zunächst eine Schicht 20 aus keramischer Farbe aufgebracht und eingebrannt, die sich dabei untrennbar mit der Glas- oder Glaskeramikplatte 30 verbindet. Dann wird auf die Schicht 20 aus keramischer Farbe eine Metallbeschichtung 10 ganzflächig aufgebracht, welche sich physikalisch mit der Schicht 20 aus keramischer Farbe ohne Spaltbildung fest verbindet. Da diese Metallbeschichtung 10 sehr dünn ist, hat sie keine nennenswerte Wärmekapazität, was für den Einsatz als Ofentür mit Fenster günstig ist. Bei der ganzflächigen Metallbeschichtung 10, z.B. bei der Verwendung des Glas- oder Glaskeramikpaneels als Herddeckel, werden die Schicht 20 aus keramischer Farbe und die Metallbeschichtung 10 nach dem Zuschnitt der Glas- oder Glaskeramikplatte 30 aus einem Glasband und einer erforderlichen mechanischen Nachbearbeitung, wie Kantenbearbeitung, Bohrarbeiten und dgl., aufgebracht. Dabei kann der Farbton der Schicht 20 aus keramischer Farbe beliebig gewählt werden.

Das Einbrennen der Schicht 20 aus keramischer Farbe erfolgt z.B. in einem Durchlaufofen mit einer Durchlaufgeschwindigkeit von etwa 140 mm/sec, wobei die Anfangstemperatur im Durchlaufofen etwa 160 DEG C und die Endtemperatur etwa 730 DEG C beträgt und einem üblichen Einbrennverfahren entspricht.

Für die Metallbeschichtung 10 kann Cr, Ag, Cu, Au, Al oder Sn verwendet werden, wobei insbesondere bei Ag, Cu, Al und Sn die Metallbeschichtung 10 mit einer transparenten Schutzschicht abgedeckt wird, um die Haltbarkeit der Metallbeschichtung 10 zu erhöhen.

Bei den Ausführungsbeispielen nach den Fig. 2 bis 5 werden in der Metallbeschichtung 10 und/oder in der Schicht 20 aus keramischer Farbe sogenannte Fehlstellen eingeführt, die als graphische Darstellungen, Schriftzüge, Verzierungen und dgl. ausgebildet sind und über Masken erzeugt werden, wie noch gezeigt wird. Die Fehlstellen können sich über einen oder mehrere Teilbereiche der Glas- oder Glaskeramikplatte 30 erstrecken.

Beim Ausführungsbeispiel nach Fig. 2 ist die auf der Sichtseite der Glas- oder Glaskeramikplatte 30 aufgebrachte Schicht 20 aus keramischer Farbe mit einer Fehlstelle 21 versehen. Die Metallbeschichtung 10 überdeckt die Glas- oder Glaskeramikplatte 30 vollständig, wobei ein Teil 11 der Metallbeschichtung mit dem Teil 31 der Glas- oder Glaskeramikplatte 30 verbunden ist. Das metallische Aussehen auf der Sichtseite des Glas- oder Glaskeramikpaneels ist im Bereich der Fehlstelle 21 der Schicht 20 aus keramischer Farbe farblich und/oder im Glanz abgestuft.

Wenn die Metallbeschichtung 10 über der Schicht 20 aus keramischer Farbe selbst eine Fehlstelle 12 hat, dann hebt sich der Teil 22 der Schicht 20 aus keramischer Farbe deutlich von der Metallbeschichtung 10 ab, wie der Fig. 3 zu entnehmen ist. Dabei kann eine beliebige Ausgestaltung der Fehlstellen 12 gewählt werden, wozu entsprechende Masken beim Aufbringen der Metallbeschichtung 10 verwendet werden. Auf diese Weise können z.B. beschriftete oder mit graphischen Darstellungen versehene Bedienfelder von Haushaltgeräten hergestellt werden, wobei die Farbe für die Schicht 20 aus keramischer Farbe im Kontrast zur Metallbeschichtung 10 gewählt wird.

Wie Fig. 4 zeigt, können die Fehlstellen 12 und 21 der Metallbeschichtung 10 und der Schicht 20 aus keramischer Farbe auch identisch ausgebildet sein und sich überdecken, so dass die Sichtseite der Glas- oder Glaskeramikplatte 30 in diesen Bereichen 31 direkt einsehbar ist. Ist die Rückseite der Glas- oder Glaskeramikplatte 30 frei, dann wirkt dieser Bereich 31 als Fenster, was z.B. bei der Ausbildung der Glas- oder Glaskeramikplatte 30 als Ofentür ausgenützt werden kann. Wird die Rückseite der Glas- oder Glaskeramikplatte 30 noch mit einer Epoxy-Farbschicht 40 versehen, dann überdeckt der Teil 41 derselben den Bereich 31 der Glas- oder Glaskeramikplatte 30, was diesen Teil 41 dreidimensional erscheinen lässt.

Schließlich zeigt Fig. 5, dass die Metallbeschichtung 10 mit Fehlstellen 12 auch direkt auf die Sichtseite der Glas- oder Glaskeramikplatte 30 aufgebracht werden kann, während die Schicht 20 aus keramischer Farbe die Rückseite der Glas- oder Glaskeramikplatte 30 vollständig bedecken kann. Über den Bereich 31 der Glas- oder Glaskeramikplatte 30 ist ein Teil 23 der Schicht aus keramischer Farbe einsehbar.

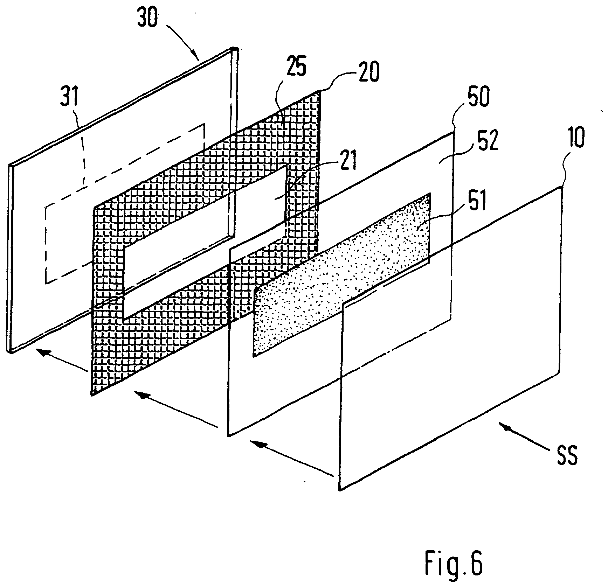

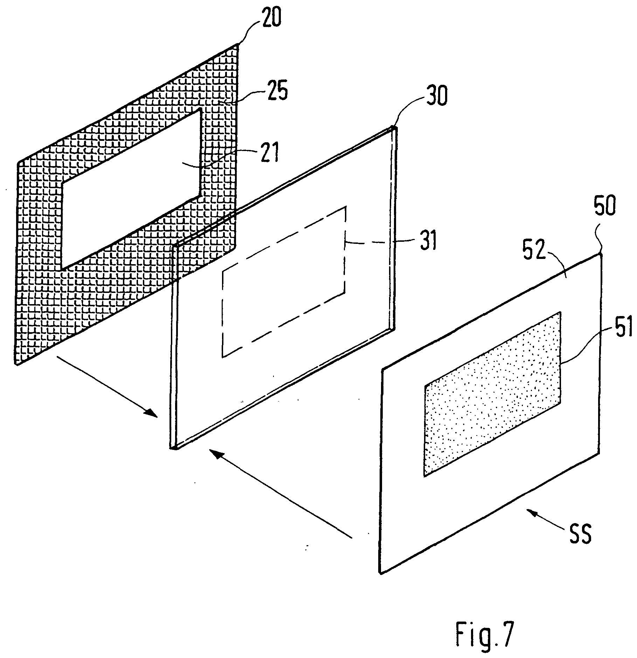

Anhand der Fig. 6 und 7 wird noch einmal auf das Verfahren zum Herstellen eines Glas- oder Glaskeramikpaneels eingegangen. Dabei zeigt Fig. 6 ein Verfahren zum Herstellen eines Glas- oder Glaskeramikpaneels mit zentrischem Fenster, das von einem Rahmen mit metallischem Aussehen umgeben ist. Der Farbrahmen 25 inklusive der Fehlstelle 21 wird in bekannter Weise per z.B. Siebdrucktechnologie aufgebracht, wobei durch geeignete Wahl der Siebparameter Maschenweite und/oder Fadenstärke eine gewünschte Struktur eingebracht werden kann. Ist die Schicht 20 eingebrannt, dann wird eine Maske 50 verwendet, die den zentrischen Bereich 51 voll abdeckt. Der rahmenartige Bereich 52 bleibt frei, so dass die Metallbeschichtung 10 den Farbrahmen 25 der Schicht 20 abdeckt, ebenso wie den zentrischen Bereich 51 der Maske 50. Die Metallbeschichtung 10 wird dann vollflächig aufgebracht, wobei an sich bekannte Beschichtungsverfahren, wie Tauchbeschichtung, Walzenbeschichtung, Sprühbeschichtung, physikalische Dampfphasenabscheidung (PVD), chemische Dampfphasenabscheidung (CVD) und insbesondere Vakuum-Sputtering verwendet werden, die zu einer Bindung zwischen der Metallbeschichtung 10 und der Schicht 20 aus keramischer Farbe führen. Nach dem Entfernen der Metallbeschichtung aus dem maskierten Bereich 51 wird der Bereich 31 der Glas- oder Glaskeramikplatte 30 als Fenster von einem metallbeschichteten Rahmen 25 der Schicht 20 aus keramischer Farbe umschlossen.

Wie die Fig. 7 zeigt, kann der Farbrahmen 25 der Schicht 20 aus keramischer Farbe mit entsprechender Maske für die Fehlstelle 21 auch auf die Rückseite der Glas- oder Glaskeramikplatte 30 aufgebracht werden und wenn gewünscht, mit einer Struktur. Auf der Rückseite RS bleibt der zentrische Bereich 31 der Glas- oder Glaskeramikplatte 30 von der Schicht 20 befreit. Auf die Sichtseite SS der Glas- oder Glaskeramikplatte 30 wird eine Maske 50 aufgebracht, die einen voll abdeckenden Bereich 51 aufweist und verhindert, dass die aufzubringende Metallbeschichtung zum vorderseitigen Bereich 31 der Glas- oder Glaskeramikplatte 30 gelangt. Der rahmenartige Bereich 52 der Maske 50 lässt die Metallbeschichtung 10 durch, so dass der rückseitige Farbrahmen 25 überdeckt wird. Wird die Maske 50 abgezogen, dann bleibt der zentrische Bereich 31 der Glas- oder Glaskeramikplatte 30 als Fenster frei.

Wie anhand der Ausführungsbeispiele gezeigt ist, kann durch Verlagerung der Metallbeschichtung 10 und der Schicht 20 aus keramischer Farbe auf dieselbe Seite oder beide Seiten der Glas- oder Glaskeramikplatte 30 und die Verteilung von Fehlstellen in die beiden Schichten und ihre Überdeckung der Metalleffekt des Glas- oder Glaskeramikpaneels in vielfacher Weise variiert werden, wobei die Farbe der Schicht 20 und die Metallauswahl für die Metallbeschichtung weitere Variationsmöglichkeiten bieten.

## Patentansprüche

1. Glas- oder Glaskeramikpaneel eines Einrichtungs- oder Haushaltsgegenstandes, bei dem Teilbereiche der Oberfläche zumindest einer Seite Metallaussehen aufweisen,
**dadurch gekennzeichnet,**
**dass** zumindest auf Teile einer Glas- oder Glaskeramikplatte (30) eine Schicht (20) keramischer Farbe eingebrannt ist, dass zumindest auf Teile der Glas- oder Glaskeramikplatte (30) eine Metallbeschichtung (10) aufgebracht ist, und dass die Schicht (20) aus keramischer Farbe auf der Rückseite und die Metallbeschichtung (10) auf der Sichtseite der Glas- oder Glaskeramikplatte (30) aufgebracht sind.

2. Glas oder Glaskeramikpaneel nach Anspruch 1,
**dadurch gekennzeichnet,**
**dass** die Schicht (20) aus keramischer Farbe und/oder die Metallbeschichtung (10) strukturiert sind (ist).

3. Glas- oder Glaskeramikpaneel nach Anspruch 1 oder 2,
**dadurch gekennzeichnet,**
**dass** auf der Sichtseite der Glas- oder Glaskeramikplatte (30) eine Metallbeschichtung (10) mit Fehlstellen (12) aufgebracht ist, und
**dass** über Fenster (31) der Glas- oder Glaskeramikplatte (30) Teile (23) der auf der Rückseite der Glas- oder Glaskeramikplatte (30) aufgebrachten Schicht (20) aus keramischer Farbe einsehbar sind.

4. Glas- oder Glaskeramikpaneel nach einem der Ansprüche 1 bis 3,
**dadurch gekennzeichnet,**
**dass** die Metallbeschichtung (10) aus Cr, Ag, Cu, Au, Al oder Sn besteht.

## Claims

1. A glass or glass-ceramic panel of an item of furniture or household item, in which partial areas of the surface have a metal appearance at least on one side,
**characterised in that**
a layer (20) of ceramic paint is baked at least on parts of a glass or glass-ceramic plate (30), that a metal coating (10) is applied at least to parts of the glass or glass-ceramic plate (30), and that the layer (20) of ceramic paint is applied to the rear side and the metal coating (10) is applied to the front side of the glass or glass-ceramic plate (30).

2. The glass or glass-ceramic panel according to claim 1,
**characterised in that**
the layer (20) of ceramic paint and/or the metal layer (10) is/are structured.

3. The glass or glass-ceramic panel according to claim 1 or 2,
**characterised in that**
that a metal coating (10) having cut-outs (12) is applied to the front side of the glass or glass-ceramic plate (30), and
that parts (23) of the layer (20), which is of ceramic paint and applied to the rear side of the glass or glass-ceramic plate (30), can be seen via windows (31) of the glass or glass-ceramic plate (30).

4. The glass or glass-ceramic panel according to one of claims 1 to 3,
**characterised in that**
the metal layer (10) consists of Cr, Ag, Cu, Au, Al or Sn.

## Revendications

1. Panneau en verre ou en vitrocéramique d'un article ménager ou d'ameublement, dans lequel des zones partielles de la surface présentent au moins un côté d'apparence métallique,
**caractérisé en ce**
**que**, au moins sur des parties d'une plaque en verre ou en vitrocéramique (30), une couche (20) de couleur céramique est cuite dans la masse, en ce que, au moins sur des parties de la plaque en verre ou en vitrocéramique (30), un revêtement métallique (10) est appliqué et en ce que la couche (20) de couleur céramique est appliquée sur le côté arrière et le revêtement métallique (10) est appliqué sur le côté visible de la plaque en verre ou en vitrocéramique (30).

2. Panneau en verre ou en vitrocéramique selon la revendication 1,
**caractérisé en ce**
**que** la couche (20) de couleur céramique et/ou le revêtement métallique (10) sont structurés.

3. Panneau en verre ou en vitrocéramique selon la revendication 1 ou 2,
**caractérisé en ce**
**que**, sur le côté visible de la plaque en verre ou en vitrocéramique (30), un revêtement métallique (10) est appliqué avec des zones non couvertes (12) et en ce que, par le biais d'une fenêtre (31) de la plaque en verre ou en vitrocéramique (30), des parties (23) de la couche (20) de couleur céramique appliquée sur le côté arrière de la plaque en verre ou en vitrocéramique (30) sont visibles.

4. Panneau en verre ou en vitrocéramique selon une des revendications 1 à 3,
**caractérisé en ce**
**que** le revêtement métallique (10) est constitué de Cr, Ag, Cu, Au, Al ou Sn.
